# EUROPÄISCHE PATENTSCHRIFT

(11) **EP 0 744 446 B1**
(45) Veröffentlichungstag und Bekanntmachung des Hinweises auf die Patenterteilung: **04.08.1999**
(21) Anmeldenummer: 96107974.6
(22) Anmeldetag: 20.05.1996
(51) Int. Cl.: C09B 67/46, D06P 1/62, D06P 1/651

(54) **Textilfarbstoffpräparationen**
Preparations of textile dyes
Préparation tinctoriales textiles

(30) Priorität: 26.05.1995 DE 19519356
(43) Veröffentlichungstag der Anmeldung: 27.11.1996
(73) Patentinhaber: DyStar Textilfarben GmbH & Co. Deutschland KG, 60318 Frankfurt am Main (DE)
(72) Erfinder: Bühler, Ulrich, Dr., 63755 Alzenau (DE); Kruse, Hubert, Dl., 61462 Königstein (DE); Az, Rainer, Dr., 65205 Wiesbaden (DE)

(56) Entgegenhaltungen:
- EP-A- 0 032 188
- EP-A- 0 582 928

## Beschreibung

Die vorliegende Erfindung betrifft flüssige oder pulverförmige Textilfarbstoffpräparationen, die ein oder mehrere Dispergiermittel auf Basis eines oxalkylierten und mit Carbonsäuren veresterten Rizinusöls enthalten.

Beim Färben und Bedrucken von textilen Fasermaterialien unter Einsatz pulverförmiger oder flüssiger Textilfarbstoffpräparationen zieht der darin feinverteilte Farbstoff vollständig oder aber nahezu vollständig auf das Fasermaterial auf. Demgegenüber belasten die Dispergiermittel, die zur Stabilisierung der Farbstoffpräparationen in diesen enthalten sind, mehr oder minder stark das Abwasser.

Diese Abwasserbelastung muß in Abwasserreinigungsanlagen kostenintensiv beseitigt oder zumindest reduziert werden. Zusätzlich können sich Probleme mit einer ausreichenden Deponiekapazität für anfallenden Klärschlamm ergeben.

Dispergierte Textilfarbstoffe in Pulverform enthalten in der Regel 100 bis 150 Gew.% Dispergiermittel, bezogen auf Farbstoff. Flüssige Textilfarbstoffpräparationen enthalten neben dem Wasseranteil etwa gleiche Anteile an Dispergiermittel und Farbstoff.

Vor diesem Hintergrund war es schon immer ein Ziel, die mit der Applikation von Textilfarbstoffen verbundene Abwasserbelastung zu reduzieren.

Ein Ansatz zur Problemlösung ist die Verwendung von Dispergiermitteln mit verbesserter biologischer Abbaubarkeit. Beim biologischen Abbau werden die Dispergiermittel durch im Klärschlamm befindliche Bakterien ganz oder teilweise zu Kohlendioxid und Wasser abgebaut.

Allerdings sind die in der derzeitigen Praxis hauptsächlich verwendeten Ligninsulfonate, die auf chemisch modifizierten nachwachsenden Rohstoffen basieren, nur sehr schlecht biologisch abbaubar. Eine Reduzierung des Molekulargewichts dieser Verbindungen führt zwar zu einer besseren Abbaubarkeit, aber auch zu einem deutlich schlechteren Dispergiervermögen.

Auch die im größeren Umfang eingesetzten, durch Kondensation von Naphthalinsulfonsäure und Formaldehyd synthetisch hergestellten Dispergiermittel lassen sich nur in geringem Maße biologisch abbauen. Auch modifizierte derartige Verbindungen, wie sie beispielsweise in der EP-A-463 401 beschrieben sind, sind nur gering abbaubar und werden aus dem Abwasser lediglich dadurch eliminiert, daß sie an den Klärschlamm absorbiert werden und so dessen Masse bzw. Volumen erhöhen. Angesichts der Probleme, die auch Klärschlamm noch verursachen kann, stellt auch diese Entwicklung noch keine befriedigende Lösung dar.

In der EP-A-582 928 werden biologisch abbaubare Dispergiermittel auf Basis nachwachsender Rohstoffe beschrieben, die ein sehr hohes Dispergiervermögen besitzen. Im Anwendungsbeispiel 11 dieses Dokuments wird die Herstellung und Verwendung einer Flüssigpräparation von C.I. Disperse Orange 13 beschrieben. Diese Präparation zeigt jedoch erhebliche Mängel in ihrer Dispersions- und Lagerstabilität. Die unzureichende Dispersionsstabilität führt beim Färben aus wäßrigem Bade zu unegalen Färbungen, zum Auftreten von Stippen beim Thermosolfärben von Gewebe oder aber zu Abfiltrationen von Farbstoff beim Färben von Garn auf Kreuzspulen oder von Gewebe auf dem Baum. Die mangelhafte Lagerstabilität äußert sich darin, daß die Präparation beim Stehen bei Raumtemperatur bzw., deutlich verstärkt bei erhöhter Temperatur, durch Reagglomeration der dispergierten Teilchen inhomogen wird und dann beim Färben die oben genannten Unegalitäten oder Reproduzierbarkeitsprobleme auftreten.

Es wurde nun überraschenderweise gefunden, daß die anspruchsgemäßen Dispergiermittel auf Basis oxalkylierten und mit Carbonsäuren veresterten Rizinusöls alle aus technischer und ökonomischer Sicht an sie gestellten Anforderungen erfüllen.

Die vorliegende Erfindung betrifft somit flüssige oder pulverförmige Textilfarbstoffpräparationen, dadurch gekennzeichnet, daß sie eine oder mehrere Verbindungen der allgemeinen Formel I 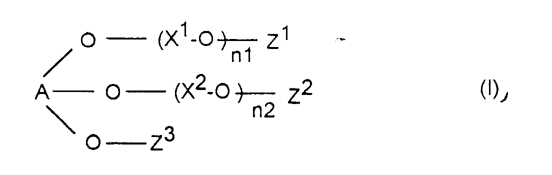 worin
- A: für den Rest eines natürlichen oder modifizierten Rizinusöls steht;
- X¹ und X²: unabhängig voneinander Ethylen oder Propylen bedeuten;
- n¹: eine ganze Zahl von 1 bis 150 ist;
- n²: eine ganze Zahl von 0 bis 150 ist;
- Z¹: für-CO(CH₂)_{q}COOM, -COCH=CHCOOM, -COCH₂CH(SO₃M)COOM, -COCH(SO₃M)CH2 COOM oder -COC₆H₄COOM steht;
- Z²: eine der Bedeutungen von Z¹ hat oder für einen Acylrest einer unmodifizierten oder modifizierten natürlichen Harzsäure steht, wobei einer der Reste Z¹ und Z² auch Wasserstoff bedeuten kann;
- Z³: für einen Acylrest einer unmodifizierten oder modifizierten natürlichen Harzsäure, einen Acylrest einer Di- oder Tricarbonsäure auf Basis einer di- oder trimerisierten (C₂₈-C₇₂)-Fettsäure oder einen Acylrest einer gesättigten oder ungesättigten (C₈-C₂₂)-Fettsäure steht; q eine ganze Zahl von 0 bis 10 ist, und
- M: für Wasserstoff, ein Alkalimetall oder ein Erdalkalimetall steht,
enthält.

Unter natürlichem Rizinusöl wird insbesondere handelsübliches Rizinusöl verstanden.

Unter modifiziertem Rizinusöl wird ein einfach oder mehrfach hydriertes oder ein einfach oder mehrfach aryliertes Rizinusöl verstanden, wobei aryliert bedeutet, daß eine Phenolcarbonsäure, vorzugsweise eine Hydroxynaphthoesäure oder ein Derivat davon, an eine olefinische Doppelbindung des Rizinusöls addiert ist.

Für X¹ und X² stehendes Propylen ist insbesondere -CH(CH₃)CH₂- oder -CH₂CH(CH₃)-. In einer Polyoxalkylkette -(X¹-O-)ₙ₁- kann X¹ auch verschiedene Bedeutungen haben. Analoges gilt für -(X²-O-)ₙ₂- und X².

Für Z² oder Z³ stehende Acylreste von natürlichen Harzsäuren leiten sich insbesondere von Abietinsäure, Dehydroabietinsäure, Dihydroabietinsäure, Tetrahydroabietinsäure, Laevopimarsäure, Dextropimarsäure und Isodextropimarsäure, wie sie in handelsüblichen Kolophoniumarten vorliegen, ab. Modifizierte Harzsäuren sind insbesondere disproportionierte, hydrierte und dimerisierte Harzsäuren.

Für Z³ stehende Acylreste von Di- oder Tricarbonsäuren auf Basis einer di- oder trimerisierten Fettsäure haben bevorzugt 36 bis 54 Kohlenstoffatome.

Für Z³ stehende Acylreste von gesättigten oder ungesättigten (C₈-C₂₂)-Fettsäuren leiten sich insbesondere ab von Octansäure, Pelargonsäure, Caprinsäure, Undecansäure, Laurinsäure, Tridecansäure, Myristinsäure, Pentadecansäure, Palmitinsäure, Heptadecansäure, Stearinsäure, Nonadecansäure, Arachinsäure, Behensäure, 10-Undecensäure, Lauroleinsäure, Myristoleinsäure, Palmitoleinsäure, 6c- und 6t-Octadecensäure, Elaidinsäure, Ölsäure, Linolsäure und Linolensäure, wobei geradzahlige Fettsäuren oder Hydroxyfettsäuren mit jeweils 8 bis 20 C-Atomen, beispielsweise die entsprechenden vorstehend genannten geradzahligen Fettsäuren sowie insbesondere ihre aus Naturprodukten gewonnenen Gemische, wie Tallölfettsäure, Talgfettsäure, Kokosölfettsäure, Palmölfettsäure und Leinölfettsäure bevorzugt sind.

Besonders bevorzugt leiten sich die genannten Acylreste von Fettsäuren mit 12 bis 18 Kohlenstoffatomen ab.

Ein für M stehendes Alkali- oder Erdalkalimetall ist insbesondere Natrium, Kalium, Magnesium oder Calcium.

Bevorzugte erfindungsgemäße Textilfarbstoffpräparationen enthalten eine oder mehrere Verbindungen der allgemeinen Formel I, worin
X¹ und X² unabhängig voneinander Ethylen oder Propylen bedeuten oder innerhalb eines Restes -(X¹-0-)_{n¹}- X¹ für Ethylen oder Propylen im Verhältnis 100 : 1 bis 10 : 100 steht und/oder innerhalb eines Restes -(X²-0-)_{n²} X² für Ethylen und Propylen im Verhältnis 100 : 1 bis 10 : 100 steht;
n¹ eine ganze Zahl von 20 bis 100 ist;
n² eine ganze Zahl von 20 bis 100 ist oder für 0 steht,
falls Z² für einen Acylrest einer unmodifizierten oder modifizierten natürlichen Harzsäure steht;
Z¹ für -CO(CH₂)₂COOM, -COCH=CHCOOM, -COCH₂CH(SO₃M)COOM oder -COCH(SO₃M)CH₂COOM steht;
Z² eine der Bedeutungen von Z¹ hat oder, falls n² gleich 0 ist, für den Acylrest einer unmodifizierten oder modifizierten natürlichen Harzsäure steht, wobei einer der Reste Z¹ und Z² auch Wasserstoff bedeuten kann;
Z³ für einen Acylrest einer unmodifizierten oder modifizierten natürlichen Harzsäure steht; und
M für Wasserstoff oder ein Alkalimetall steht.

Besonders bevorzugte erfindungsgemäße Textilfarbstoffpräparationen enthalten eine oder mehrere Verbindungen der allgemeinen Formel I, worin
X¹ und X² Ethylen bedeuten;
n¹ und n² zusammen eine ganze Zahl von 60 bis 150 ergeben;
Z¹ und Z² gleich sind und für -CO(CH₂)₂CO0M, -COCH₂CH(SO₃M)COOM oder -COCH(SO₃M)CH₂COOM stehen;
Z³ für einen Acylrest einer unmodifizierten oder modifizierten Harzsäure steht, und
M Natrium bedeutet.

Die in den erfindungsgemäßen Textilfarbstoffpräparationen enthaltenen Textilfarbstoffe sind in Wasser schwer- oder unlöslich.

Solche Farbstoffe sind beispielsweise Dispersionsfarbstoffe, wie Azo-, Anthrachinon-, Methin-, Chinophthalon-, Naphthalimid-, Naphthochinon- oder Nitrofarbstoffe, wie sie beispielsweise in Ullmanns Encyklopädie der technischen Chemie, 4. Auflage, Bd. 10, S. 155 ff., beschrieben sind.

Es kann sich aber auch um Küpenfarbstoffe handeln, insbesondere um Anthrachinonabkömmlinge, Abkömmlinge des Indigo und höher annelierte und heterocyclische Benzo- und Naphthochinone, wie sie beispielsweise in Ullmanns Encyklopädie der technischen Chemie, 4. Auflage, Bd. 22, S. 645 ff-, beschrieben sind.

Schließlich kann es sich auch um in Wasser schwer- oder unlösliche Schwefelfarbstoffe handeln, wie sie beispielsweise in Ullmanns Encyklopädie der technischen Chemie, 4. Auflage, Bd. 21, S. 265 ff., beschrieben sind.

Die erfindungsgemäßen Textilfarbstoffpräparationen können auch mehrere Farbstoffe enthalten, die der gleichen Farbstoffklasse oder auch verschiedenen Farbstoffklassen angehören können. So können beispielsweise Mischungen aus Dispersions- und Küpenfarbstoffen enthalten sein. Bevorzugte Textilfarbstoffpräparationen sind solche, die Küpenfarbstoffe enthalten. Besonders bevorzugte Textilfarbstoffpräparationen enthalten Dispersionsfarbstoffe.

Die erfindungsgemäßen flüssigen Textilfarbstoffpräparationen enthalten bevorzugt Farbstoffmengen von 20 bis 50 Gew.%, besonders bevorzugt 25 bis 45 Gew.%. Der Farbstoffgehalt von pulverförmigen Präparationen liegt bevorzugt bei 30 bis 70 Gew.%, besonders bevorzugt bei 35 bis 60 Gew.%.

Der Anteil an Verbindungen der allgemeinen Formel I liegt bevorzugt bei 10 bis 50 Gew.%, besonders bevorzugt bei 15 bis 30 Gew.%, jeweils bezogen auf die Textilfarbstoffmenge.

Die erfindungsgemäßen Textilfarbstoffpräparationen können beispielsweise dadurch hergestellt werden, daß man einen oder mehrere Textilfarbstoffe in Gegenwart einer oder mehrerer Verbindungen der allgemeinen Formel I und Wasser in geeigneten Mühlen aufmahlt und, sofern eine pulverförmige Präparation hergestellt werden soll, anschließend die Flüssigkeit entzieht.

Geeignete Mühlen sind beispielsweise Kugel-, Schwing-, Perl- oder Sandmühlen. In ihnen wird der Textilfarbstoff, bevorzugt in Form eines wäßrigen Farbstoffpreßkuchens, in Gegenwart der Verbindungen der allgemeinen Formel I bis zu einer Korngröße von 0,5 bis 5 µm gemahlen. Vorzugsweise ist eine Korngrößenverteilung erwünscht, bei der 50 bis 90 % der Teilchen eine Größe von <1 µm haben.

Es kann unter Umständen vorteilhaft sein, Farbstoff, Verbindung der allgemeinen Formel I und Wasser in einem Rührkessel oder Schlagtrog vorzumischen oder in einer Kolloidmühle vorzuzerkleinern.

Der Aufmahlprozeß kann kontinuierlich in einer Mühlenkaskade oder aber diskontinuierlich in einem Mahlapparat erfolgen. Der Mahlprozeß wird bevorzugt bei 0 bis 100°C, besonders bevorzugt bei 20 bis 60°C durchgeführt.

Soll eine pulverförmige Präparation hergestellt werden, muß der so erhaltenen flüssigen Präparation die Flüssigkeit entzogen werden. Dies kann durch Vakuumtrocknung, Gefriertrocknung, durch Trocknung auf Walzentrocknern, vorzugsweise aber durch Sprühtrocknung geschehen. Geeignete Aggregate für die Sprühtrocknung sind Vakuumschaufeltrockner oder vorzugsweise Zerstäubungstrockner. Zur Zerstäubung des Mahlteiges können hierbei Zweistoffdüsen, Druckdüsen oder Scheiben eingesetzt werden. Die Lufteingangstemperatur liegt hierbei bevorzugt im Bereich von 120 bis 220°C, die Ausgangstemperatur bevorzugt bei 70 bis 90°C.

Unter Umständen kann es zur Verbesserung der Dispersionsstabilität und insbesondere der Lagerstabilität und der Redispergierbarkeit der Flüssig- und Pulverpräparationen vorteilhaft sein, den erfindungsgemäßen Textilfarbstoffpräparationen weitere nichtionogene oder vorzugsweise anionische Dispergiermittel zuzusetzen.

Anionische Dispergiermittel sind z. B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff, Alkyl- oder Alkylarylsulfonate, Alkylarylpolyglykolethersulfate und insbesondere neutralisierte Säureester eines oxethylierten Novolacks bzw. Alkalimetallsalze von Ligninsulfonaten.

Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an C₈-C₁₀-Alkylphenolen.

Der Anteil dieser Dispergiermittel, bezogen auf den Anteil an Textilfarbstoff in der Präparation liegt bevorzugt bei 2 bis 35 Gew.%, besonders bevorzugt bei 5 bis 30 Gew.%.

Den erfindungsgemäßen pulverförmigen Textilfarbstoffpräparationen können als sogenannte Füllstoffe noch Stoffe, wie Sorbit oder Dextrine, zugesetzt werden. Diese Füllstoffe haben keine dispergierende Wirkung und lediglich die Aufgabe, das Verkleben des Pulvers bei der Sprühtrocknung, wie es bei zu hohen Anteilen an Verbindungen der allgemeinen Formel I auftreten könnte, zu unterbinden.

Die erfindungsgemäßen Textilfarbstoffpräparationen können auch noch weitere Hilfsmittel enthalten, z.B. solche, die als Oxidationsmittel wirken, wie z.B. Natrium-m-nitrobenzolsulfonat oder fungizide Mittel, wie z.B. Natrium-o-phenolphenolat. Als Pulver formierte Farbstoffmischungen enthalten darüber hinaus noch andere Hilfsmittel, wie z.B. Netz- oder Entstaubungsmittel. Die Farbstoffpräparationen enthalten die genannten Hilfsmittel in Mengen von 0,1 - 5 Gew.%, bevorzugt 0,2 - 2 Gew.%.

Die zur Herstellung der erfindungsgemäßen Textilfarbpräparationen benötigten Verbindungen der allgemeinen Formel I sind an sich bekannt und können beispielsweise nach den in der EP-A-582 928 angegebenen Verfahren erhalten werden.

Erfindungsgemäße Textilfarbstoffpräparationen, die Dispersionsfarbstoff enthalten, eignen sich hervorragend zum Färben und Bedrucken von textilen Polyesterfasermaterialien, Polyamiden, Cellulose-2 1/2-Acetat, Cellulosetriacetat und deren Mischungen mit natürlichen Fasermaterialien, wie Baumwolle, regenerierte Cellulose oder Wolle. Polyesterfasermaterialien sind dabei insbesondere solche auf Basis hochmolekularer Polyethylenglykolterephthalate.

Erfindungsgemäße Textilfarbstoffpräparationen, die Küpen- oder Schwefelfarbstoffe enthalten, sind hervorragend zum Färben von natürlichen Fasermaterialien geeignet. Solche natürlichen Fasermaterialien sind beispielsweise Cellulosefasermaterialien, insbesondere Baumwolle, aber auch Wolle. Auch Mischungen dieser Materialien mit synthetischen Fasermaterialien können so gefärbt werden.

Detaillierte Angaben zu den Färbeverfahren finden sich beispielsweise in Ullmanns Encyklopädie der technischen Chemie, 4. Auflage, Bd. 22, insbesondere Seiten 644 ff.

Die erfindungsgemäßen Textilfarbstoffpräparationen erfüllen die an sie gestellten technischen und ökonomischen Anforderungen in hervorragender Weise. Die Verbindungen der allgemeinen Formel I basieren erstens überwiegend auf nachwachsenden Rohstoffen. Sie haben zweitens ein hervorragendes Dispergiervermögen, so daß im Vergleich mit herkömmlichen Dispergiermitteln die Einsatzmengen deutlich reduziert werden können, und drittens sind sie sehr gut biologisch abbaubar. Dies gilt sowohl für die Verbindungen der allgemeinen Formel I selbst als auch insbesondere für die bei ihrer Verwendung erhaltenen Färbereiabwässer.

Darüberhinaus erfüllen die erfindungsgemäßen Textilfarbstoffpräparationen alle technischen Anforderungen, d.h. sie lassen sich auf herkömmliche Art und Weise herstellen und besitzen die hohe Dispersionsstabilität, die für den Einsatz in modernen Färbereien und Druckereien erforderlich ist.

Sie färben textiles Material, das als Garn oder Gewebe in hoher Wickeldichte vorliegt, auch bei hohen Farbstoffeinsatzmengen und hohen Flottendurchsätzen, d.h. hohen Scherkräften homogen und ohne Farbstoffablagerungen. Sie lassen sich leicht und homogen aufmahlen und reagglomerieren nicht, so daß mit ihnen stippenfreie Thermosolfärbungen und Drucke erzeugt werden können. Die flüssigen Präparationen sind lagerstabil über mehrere Monate auch bei erhöhter Lagertemperatur, d.h. ihre Homogenität ändert sich nicht, es tritt keine Reagglomeration oder Phasentrennung, kein Absetzen und auch keine Viskositätsänderung auf. An den Behälterwänden angetrocknete Dispersion läßt sich durch Einrühren in die Flüssigpräparation leicht wieder redispergieren.

Die erfindungsgemäßen Pulverpräparationen lassen sich unter den üblichen Bedingungen sprühtrocknen. Sie sind ebenfalls lagerstabil und benetzen gut bzw. dispergieren nach kurzem Rühren, wenn sie in eine wäßrige Färbeflotte überführt werden sollen.

Die biologische Abbaubarkeit der Verbindungen der allgemeinen Formel I kann beispielsweise nach dem Zahn-Wellens-Test (R. Zahn, H. Wellens, Chem. Zeitung, Bd. 90, 228 (1974)) oder dem DOC-Die Away Test bestimmt werden.

Beim Zahn-Wellens-Test wird die Prüfsubstanz, ein definiertes Verdünnungswasser und kommunaler Belebtschlamm in einem statischen Ansatz unter standardisierten Bedingungen bis zu 28 Tagen gerührt und belüftet. In regelmäßigen Abständen werden Proben entnommen und auf DOC ("dissolved organic carbon")-Abnahme nach DIN 38409, Teil 3 (1983) analysiert. Im Vergleich zum Anfangswert wird die Abnahme der DOC als Maß für die vollständige Elimination aus dem Wasser herangezogen. Je nach Verlauf der Eliminationskurve können biologische Abbauvorgänge, Absorption an den Belebtschlamm oder Strippeffekte unterschieden werden. Kriterien für einen biologosichen Abbau sind das Vorliegen einer typischen S-förmigen Abbaukurve, ein geringer Absorptionsanteil (Elimination nach 3 h <20 %) und das Fehlen von Hinweisen auf Strippeffekte. Eine Prüfsubstanz darf nur dann als biologisch abbaubar bezeichnet werden, wenn dies aus den Testergebnissen oder aus zusätzlichen Informationen eindeutig hervorgeht.

Die Überprüfung der Abnahme an gelöstem organischen Kohlenstoff im Testversuch kann auch durch Messung des Chemischen Sauerstoffbedarfs (CSB) des Ansatzes nach DIN 38409, Teil 4, in zeitlichen Abständen erfolgen.

Beim DOC-Die Away Test wird dem Testansatz zusätzlich noch ein definiertes anorganisches Nährsalzmedium zugefügt.

Die Prüfung auf biologische Abbaubarkeit kann sowohl mit den Verbindungen der allgemeinen Formel I selbst erfolgen, oder aber mit dem Färbereiabwasser aus den Färbungen der mit ihnen eingestellten Textilfarbstoffpräparationen. Da die Verbindungen der allgemeinen Formel I beim Färbeprozess zumindest teilweise verseift werden und die Verseifungsprodukte besser abbaubar sind, ergeben sich bei den Färbereiabwässern höhere Abbauraten.

### Beispiel 1

a) 16,9 g eines wasserhaltigen Filterkuchens des Farbstoffs C.I. Disperse Blue 165, die 13,5 g Reinfarbstoff enthalten, und 17,6 g eines wasserhaltigen Filterkuchens des Farbstoffs C.I. Disperse Blue 366, die 15,0 g Reinfarbstoff enthalten, werden mit 7,1 g einer 80%igen wäßrigen Lösung, die 5,7 g der Verbindung der allgemeinen Formel I, in der A den Rest von Rizinusöl, X¹ und X² Ethylen, die Summe aus n¹ und n² ca. 80, Z¹ und Z² der Acylrest von Sulfobernsteinsäure-Di-Na-Salz und Z³ der Acylrest der Dehydroabietinsäure ist, 4,3 g eines Ligninsulfonats und 54,1 g Wasser in einer Sandmühle so lange gemahlen, bis ca. 80 % der Farbstoffteilchen eine Korngröße - von <1 µm aufweisen. Die so erhaltene flüssige Dispersion wird mit einem Sieb vom Sand getrennt.
b) 1,25 g der so erhaltenen Flüssigpräparation werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt 1/2 h bei 125°C. Nach anschließendem Spülen, reduktiver Nachbehandlung mit einer 0,2%igen Natriumdithionitlösung während 15 min bei 70 bis 80°C, Spülen und Trocknen, erhält man eine farbstarke blaue Färbung mit hervorragenden coloristischen Eigenschaften.
c) 1 g dieser Flüssigpräparation werden in 250 ml Wasser eingerührt und unter Rühren mit 0,4 g eines handelsüblichen Dispergiermittels auf Basis eines Kondensationsprodukts aus m-Kresol, Formaldehyd und Natriumsulfit, 0,8 g eines handelsüblichen Carriers auf Basis von Methylnaphthalin, 0,8 g Natriumacetat krist. sowie 1,2 ml 30%ige Essigsäure versetzt und mit Wasser auf 400 ml aufgefüllt. Der pH-Wert des Färbebads beträgt 4,5. In dieses Färbebad werden 10 g eines Polyestergewebes auf Basis von Polyethylenglykolterephthalat eingebracht. Im offenen Gefäß wird 90 min bei 95°C gefärbt, das Färbegut herausgenommen, gespült, reduktiv mit alkalischer 0,2%iger Natriumdithionitlösung (15 min bei 60 bis 70°C) nachbehandelt, erneut gespült und getrocknet. Dabei wird eine farbstarke blaue Färbung mit hervorragenden coloristischen Eigenschaften erhalten.

### Beispiel 2

a) 93,5 g eines wasserhaltigen Filterkuchens des Farbstoffs C.I. Disperse Yellow 114, die 37,4 g Reinfarbstoff enthalten, werden mit 5,7 g einer Verbindung der allgemeinen Formel I, in der A der Rest von Rizinusöl, X¹ und X² Ethylen, die Summe aus n¹ und n² ca. 100, Z¹ und Z² der Acylrest von Maleinsäure-Na-Salz und Z³ der Acylrest der Dehydroabietinsäure ist, 3,6 g eines Ligninsulfonates und 0,3 g eines Fungizides auf Basis Benzimidazol in einer Kugelmühle so lange gemahlen, bis 75 % der Farbstoffteilchen eine Korngröße von <1 µm haben. Die so erhaltene Dispersion wird durch Filtration von den Mahlkugeln abgetrennt.
b) 20 g der so erhaltenen Flüssigpräparation werden mit 15 g eines handelsüblichen Antimigrationsmittels und 2 g Mononatriumphosphat so in eine Klotzflotte eingerührt, daß deren Endvolumen 1 Liter beträgt. Mit dieser Klotzflotte wird ein 65:35 Polyester/Baumwoll-Mischgewebe bei 25°C imprägniert, auf ca. 65 % Flüssigkeitsaufnahme abgequetscht, im Infrarot-Trockner 30 sec. vorgetrocknet, 60 sec. bei 110°C getrocknet und der Dispersionsfarbstoff bei 210°C während 60 sec. in der Polyesterfaser fixiert. Man erhält so ein Gewebe, dessen Polyesteranteil gelb angefärbt ist. Der Baumwollanteil kann anschließend beispielsweise mit einem farbtongleichen Reaktiv- oder Küpenfarbstoff nachgefärbt werden.

### Beispiel 3

a) 150 g eines wasserhaltigen Filterkuchens des Farbstoffs C.I. Disperse Yellow 114, die 60 g Reinfarbstoff enthalten, 25 g der Verbindung der allgemeinen Formel I aus Beispiel la in 80%iger Form und 20 g eines Ligninsulfonats werden mit einem Zackenrührer homogenisiert. Die erhaltene Suspension wird mit 50%iger Essigsäure auf pH 8 gestellt und anschließend 2 h bei Raumtemperatur in einer Perlmühle gemahlen, gesiebt und in einem Sprühtrockner bei einer Lufteingangstemperatur von 140°C und einer Ausgangstemperatur von 75°C sprühgetrocknet.
b) Werden anstelle der 1,25 g der Flüssigpräparation des Beispiels 1b 0,6 g der Pulverpräparation des Beispiels 3a eingesetzt und weiter so verfahren wie im Beispiel 1b beschrieben, erhält man eine farbstarke gelbe Färbung.

### Beispiel 4

a) 400 g eines wasserhaltigen Filterkuchens des Farbstoffs C.I. Vat Red 1, die 100 g Reinfarbstoff enthalten, werden mit 10 g einer Verbindung der allgemeinen Formel I, in der A den Rest Rizinusöl, X¹ und X² jeweils eine Mischung aus 90 Gew.-teilen Ethylen und 10 Gew.-teilen Propylen, die Summe aus n¹ und n² ca. 120, Z¹ und Z² eine statistische Mischung der Acylreste von Sulfobernsteinsäure-Na-Salz und Maleinsäure-Na-Salz im Gewichtsverhältnis 1:1 und Z3 der Acylrest einer modifizierten natürlichen Harzsäure ist, 30 g eines Natriumligninsulfonates und 0,5 g eines handelsüblichen Entstaubungsmittels auf Basis eines emulgierten Mineralöls ist, wie in Beispiel 3a beschrieben, in eine Pulverpräparation überführt.
b) 0,3 g des so erhaltenen Farbstoffpulvers werden in 40 ml warmes Wasser eingerührt, mit 16 ml einer 33%igen wäßrigen Natronlauge und 8 ml einer 10%igen wäßrigen Hydrosulfitlösung versetzt und mit 125 ml Wasser verdünnt. In diese Färbeflotte werden 10 g eines Baumwollgewebes eingebracht, auf 70°C erwärmt, 15 min bei 70°C gehalten, auf 30°C abgekühlt, herausgenommen und mit Wasser gespült. Anschließend wird der auf der Faser befindliche, verküpte Farbstoff reoxidiert, indem das so erhaltene Baumwollgewebe in 200 ml Wasser, dem 1 ml einer 35%igen Wasserstoffperoxid-Lösung und 0,2 g Soda zugesetzt wurden, 10 min auf 60°C erhitzt wird. Nach dem Spülen mit Wasser, Seifen, erneutem Spülen und Trocknen wird ein Baumwollgewebe erhalten, das in einem brillanten Rosaton gefärbt ist.

### Beispiel 5

100 g eines wasserhaltigen Filterkuchens des Farbstoffs C.I. Sulphur Blue 13, die 30 g Reinfarbstoff enthalten, werden mit 2 g der Verbindung der allgemeinen Formel I aus Beispiel 2a, wie dort beschrieben, in eine flüssige Dispersion überführt. Mit dieser flüssigen Schwefelfarbstoffpräparation läßt sich Baumwolle auf herkömmliche Art und Weise färben.

## Patentansprüche

1. Flüssige oder pulverförmige Textilfarbstoffpräparationen, dadurch gekennzeichnet, daß sie eine oder mehrere Verbindungen der allgemeinen Formel I 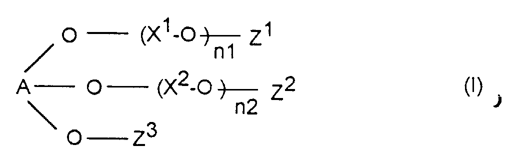 worin
A für den Rest eines natürlichen oder modifizierten Rizinusöls steht;
X¹ und X² unabhängig voneinander Ethylen oder Propylen bedeuten;
n¹ eine ganze Zahl von 1 bis 150 ist;
n² eine ganze Zahl von 0 bis 150 ist;
Z¹ für -CO(CH₂)_{q}COOM, -COCH=CHCOOM, -COCH₂CH(SO₃M)COOM, -COCH(SO₃M)CH₂COOM oder -C0C₆H₄COOM steht;
Z² eine der Bedeutungen von Z¹ hat oder für einen Acylrest einer unmodifizierten oder modifizierten natürlichen Harzsäure steht, wobei einer der Reste Z¹ und Z² auch Wasserstoff bedeuten kann;
Z³ für einen Acylrest einer unmodifizierten oder modifizierten natürlichen Harzsäure, einen Acylrest einer Di- oder Tricarbonsäure auf Basis einer di- oder trimerisierten (C₂₈-C₇₂)-Fettsäure oder einen Acylrest einer gesättigten oder ungesättigten (C₈-C₂₂)-Fettsäure steht; q eine ganze Zahl von 0 bis 10 ist, und
M für Wasserstoff, ein Alkalimetall oder ein Erdalkalimetall steht,
enthalten.

2. Textilfarbstoffpräparation gemäß Anspruch 1, dadurch gekennzeichnet, daß in der allgemeinen Formel I X¹ und X² unabhängig voneinander Ethylen oder Propylen bedeuten oder innerhalb eines Restes -(X¹-O)_{n¹}- X¹ für Ethylen oder Propylen im Verhältnis 100 : 1 bis 10 : 100 steht und/oder innerhalb eines Restes -(X²-0-)_{n²} X² für Ethylen und Propylen im Verhältnis 100 : 1 bis 10 : 100 steht;
n¹ eine ganze Zahl von 20 bis 100 ist;
n² eine ganze Zahl von 20 bis 100 ist oder für 0 steht,
falls Z² für einen Acylrest einer unmodifizierten oder modifizierten natürlichen Harzsäure steht;
Z¹ für -CO(CH₂)₂COOM, -COCH=CHCOOM, -COCH₂CH(SO₃M)COOM oder -COCH(SO₃M)CH₂COOM steht;
Z² eine der Bedeutungen von Z¹ hat oder, falls n² gleich 0 ist, für den Acylrest einer unmodifizierten oder modifizierten natürlichen Harzsäure steht, wobei einer der Reste Z¹ und Z² auch Wasserstoff bedeuten kann;
Z³ für einen Acylrest einer unmodifizierten oder modifizierten natürlichen Harzsäure steht; und
M für Wasserstoff oder ein Alkalimetall steht.

3. Textilfarbstoffpräparation gemäß Anspruch 1 und/oder 2, dadurch gekennzeichnet, daß in der allgemeinen Formel I
X¹ und X² Ethylen bedeuten;
n¹ und n² zusammen eine ganze Zahl von 60 bis 150 ergeben;
Z¹ und Z² gleich sind und für -CO(CH₂)₂C00M, -COCH₂CH(SO₃M)COOM oder -COCH(SO₃M)CH₂COOM stehen;
Z³ für einen Acylrest einer unmodifizierte oder modifizierten Harzsäure steht, und
M Natrium bedeutet.

4. Textilfarbstoffpräparation gemäß einem oder mehreren der Ansprüche 1 bis 3, dadurch gekennzeichnet, daß sie einen oder mehrere Dispersionsfarbstoffe, wie Azo-, Anthrachinon-, Methin-, Chinophthalon-, Naphthalimid-, Naphthochinon- oder Nitrofarbstoffe, enthält.

5. Textilfarbstoffpräparation gemäß einem oder mehreren der Ansprüche 1 bis 4, dadurch gekennzeichnet, daß sie flüssig ist und 20 bis 50 Gew.% Farbstoff enthält.

6. Textilfarbstoffpräparation gemäß einem oder mehreren der Ansprüche 1 bis 4, dadurch gekennzeichnet, daß sie pulverförmig ist und 30 bis 70 Gew.% Farbstoff enthält.

7. Textilfarbstoffpräparation gemäß einem oder mehreren der Ansprüche 1 bis 6, dadurch gekennzeichnet, daß sie Verbindungen der allgemeinen Formel I in Mengen von 10 bis 50 Gew.%, bezogen auf die Textilfarbstoffmenge, enthält.

8. Verfahren zur Herstellung einer Textilfarbstoffpräparation gemäß einem oder mehreren der Ansprüche 1 bis 7, dadurch gekennzeichnet, daß ein oder mehrere Textilfarbstoffe in Gegenwart einer oder mehrerer Verbindungen der allgemeinen Formel I und Wasser in geeigneten Mühlen aufgemahlen und, sofern eine pulverförmige Präparation hergestellt werden soll, die Flüssigkeit entzogen wird.

9. Verwendung der Textilfarbstoffpräparationen gemäß einem oder mehreren der Ansprüche 1 bis 7 zum Färben und Bedrucken von textilen Polyesterfasermaterialien, Polyamiden, Cellulose-2 1/2-Acetat, Cellulosetriacetat und deren Mischungen mit natürlichen Fasermaterialien, wie Baumwolle, regenerierte Cellulose oder Wolle.

## Claims

1. Liquid or pulverulent textile dye preparations, characterized in that they contain one or more compounds of the general formula I 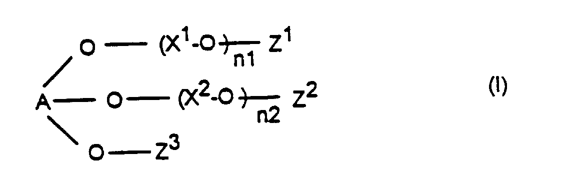 where
A is the radical of a natural or modified castor oil;
X¹ and X² are independently ethylene or propylene;
n¹ is an integer from 1 to 150;
n² is an integer from 0 to 150;
Z¹ is -CO(CH₂)_{q}COOM, -COCH=CHCOOM, -COCH₂CH(SO₃M)COOM, -COCH(SO₃M)CH₂COOM or -COC₆H₄COOM;
Z² has one of the meanings of Z¹ or is an acyl radical of an unmodified or modified natural resin acid, although one of the radicals Z¹ and Z² can also be hydrogen;
Z³ is an acyl radical of an unmodified or modified natural resin acid, an acyl radical of a di- or tricarboxylic acid based on a di- or trimerized C₂₈-C₇₂ fatty acid or an acyl radical of a saturated or unsaturated C₈-C₂₂ fatty acid; q is an integer from 0 to 10, and
M is hydrogen, an alkali metal or an alkaline earth metal.

2. A textile dye preparation as claimed in claim 1, characterized in that, in the general formula I, x¹ and X² are independently ethylene or propylene or within a radical -(X¹-O)_{n¹} X¹ is ethylene or propylene in a ratio of 100:1 to 10:100 and/or within a radical -(X²-O)_{n²} X² is ethylene and propylene in a ratio of 100:1 to 10:100;
n¹ is an integer from 20 to 100;
n² is an integer from 20 to 100 or is 0,
if Z² is an acyl radical of an unmodified or modified natural resin acid;
Z¹ is -CO(CH₂)₂COOM, -COCH=CHCOOM, -COCH₂CH(SO₃M)COOM or -COCH(SO₃M)CH₂COOM;
Z² has one of the meanings of Z¹ or, if n² is 0, is the acyl radical of an unmodified or modified natural resin acid, although one of the radicals Z¹ and Z² may also be hydrogen;
Z³ is an acyl radical of an unmodified or modified natural resin acid; and
M is hydrogen or an alkali metal.

3. A textile dye preparation as claimed in claim 1 and/or 2, characterized in that in the general formula I
X¹ and X² are ethylene;
n¹ and n² are together an integer from 60 to 150;
Z¹ and Z² are identical and represent -CO(CH₂)₂COOM, -COCH₂CH(SO₃M)COOM or -COCH(SO₃M)CH₂COOM;
Z³ is an acyl radical of an unmodified or modified resin acid, and
M is sodium.

4. A textile dye preparation as claimed in one or more of claims 1 to 3, characterized in that it contains one or more disperse dyes, such as azo, anthraquinone, methine, quinophthalone, naphthalimide, naphthoquinone or nitro dyes.

5. A textile dye preparation as claimed in one or more of claims 1 to 4, characterized in that it is liquid and contains 20 to 50% by weight of dye.

6. A textile dye preparation as claimed in one or more of claims 1 to 4, characterized in that it is pulverulent and contains 30 to 70% by weight of dye.

7. A textile dye preparation as claimed in one or more of claims 1 to 6, characterized in that it contains compounds of the general formula I in amounts of 10 to 50% by weight, based on the amount of textile dye.

8. A process for producing a textile dye preparation as claimed in one or more of claims 1 to 7, characterized in that one or more textile dyes are ground in suitable mills in the presence of one or more compounds of the general formula I and water and, if a pulverulent preparation is to be produced, the liquid is removed.

9. The use of the textile dye preparations of one or more of claims 1 to 7 for dyeing and printing textile polyester fiber materials, polyamides, cellulose acetate, cellulose triacetate and blends thereof with natural fiber materials, such as cotton, regenerated cellulose or wool.

## Revendications

1. Préparations liquides ou pulvérulentes de colorant textile, caractérisées en ce qu'elles contiennent un ou plusieurs composés de formule générale I : 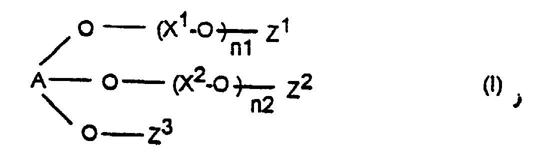 dans laquelle :
A représente le radical d'une huile de ricin naturelle ou modifiée ;
X¹ et X² désignent, indépendamment l'un de l'autre, de l'éthylène ou du propylène ;
n¹ est un nombre entier de 1 à 150 ;
n² est un nombre entier de 0 à 150 ;
Z¹ représente -CO(CH₂)_{q}COOM, -COCH=CHCOOM, -COCH₂CH(SO₃M)COOM, -COCH(SO₃M)CH₂COOM ou -COC₆H₄COOM ;
Z² a une des significations de Z¹ ou représente un radical acyle d'un acide résinique naturel non modifié ou modifié, un des radicaux Z¹ et Z² pouvant également désigner de l'hydrogène ;
Z³ représente un radical acyle d'un acide résinique naturel non modifié ou modifié, un radical acyle d'un acide di- ou tricarboxylique à base d'un acide gras en C₂₈-C₇₂ di- ou trimérisé ou un radical acyle d'un acide gras en C₈-C₂₂ saturé ou insaturé ; q est un nombre entier de 0 à 10, et
M représente de l'hydrogène, un métal alcalin ou un métal alcalino-terreux.

2. Préparation de colorant textile selon la revendication 1, caractérisée en ce que, dans la formule générale I, X¹ et X² désignent, indépendamment l'un de l'autre, de l'éthylène ou du propylène ou, dans un radical -(X¹-O)_{n¹}-, X¹ représente de l'éthylène ou du propylène dans le rapport 100:1 à 10:100 et/ou, dans un radical -(X²-O-)_{n²}-, X² représente de l'éthylène et du propylène dans le rapport 100:1 à 10:100 ;
n¹ est un nombre entier de 20 à 100 ;
n² est un nombre entier de 20 à 100 ou représente 0, au cas où Z² représente un radical acyle d'un acide résinique naturel non modifié ou modifié ;
Z¹ représente -CO(CH₂)₂COOM, -COCH=CHCOOM, -COCH₂CH(SO₃M)COOM, ou -COCH(SO₃M)CH₂COOM ;
Z² a une des significations de Z¹ ou, au cas où n² est égal à 0, représente le radical acyle d'un acide résinique naturel non modifié ou modifié, un des radicaux Z¹ et Z² pouvant également désigner de l'hydrogène ;
Z³ représente un radical acyle d'un acide résinique naturel non modifié ou modifié ; et
M représente de l'hydrogène ou un métal alcalin.

3. Préparation de colorant textile selon la revendication 1 et/ou 2, caractérisée en ce que, dans la formule générale I,
X¹ et X² désignent de l'éthylène ;
n¹ et n² forment ensemble un nombre entier de 60 à 150 ; Z¹ et Z² sont identiques et représentent -CO(CH₂)₂COOM, -COCH₂CH(SO₃M)COOM ou -COCH(SO₃M)CH₂COOM ;
Z³ représente un radical acyle d'un acide résinique non modifié ou modifié, et
M désigne du sodium.

4. Préparation de colorant textile selon une ou plusieurs des revendications 1 à 3, caractérisée en ce qu'elle contient un ou plusieurs colorants en dispersion, tels que des colorants azoïques, d'anthraquinone, de méthine, de quinophtalone, de naphtalimide, de naphtoquinone ou de nitro.

5. Préparation de colorant textile selon une ou plusieurs des revendications 1 à 4, caractérisée en ce qu'elle est liquide et contient 20 à 50% en poids de colorant.

6. Préparation de colorant textile selon une ou plusieurs des revendications 1 à 4, caractérisée en ce qu'elle est pulvérulente et contient 30 à 70% en poids de colorant.

7. Préparation de colorant textile selon une ou plusieurs des revendications 1 à 6, caractérisée en ce qu'elle contient des composés de formule générale I en quantités de 10 à 50% en poids par rapport à la quantité de colorant textile.

8. Procédé de fabrication d'une préparation de colorant textile selon une ou plusieurs des revendications 1 à 7, caractérisé en ce qu'on broie un ou plusieurs colorants textiles en présence d'un ou plusieurs composés de formule générale I et d'eau dans des broyeurs appropriés et qu'on élimine le liquide, si l'on veut fabriquer une préparation pulvérulente.

9. Utilisation des préparations de colorant textile selon une ou plusieurs des revendications 1 à 7 pour teinter et imprimer des matériaux textiles en fibres de polyester, des polyamides, de l'acétate de cellulose- 2 1/2, du triacétate de cellulose et leurs mélanges avec des matériaux en fibres naturelles, tels que du coton, de la cellulose régénérée ou de la laine.
